# EUROPÄISCHE PATENTANMELDUNG

(11) **EP 3 650 781 A1**
(43) Veröffentlichungstag der Anmeldung: **13.05.2020**
(21) Anmeldenummer: 19207076.1
(22) Anmeldetag: 05.11.2019
(51) Int. Cl.: F25B 27/00, F25D 11/00, F25D 16/00, F25D 29/00, F25D 31/00, F25D 19/04

(54) **TEMPERIERBARER CONTAINER MIT VAKUUMISOLATIONSELEMENTEN**

(30) Priorität: 06.11.2018 DE 202018106306 U
(71) Anmelder: va-Q-tec AG, 97080 Würzburg (DE)
(72) Erfinder: Kuhn, Dr. Joachim, 97074 Würzburg (DE); Schmidt, Sebastian, 99425 Weimar (DE); Taraschewski, Thomas, 97070 Würzburg (DE)
(74) Vertreter: Gleim, Christian Ragnar

(57) **Zusammenfassung**

Temperierbarer Container (1) mit Vakuumisolationselementen mit einem Innenraum (2), welcher Container (1) eine Wandung (3), mit einer Öffnung (31) für in den Innenraum (2) einzulegende Gegenstände, und ein die Öffnung (31) verschließendes Türelement (4) umfasst, wobei an einer Außenseite des Containers (1) Transportelemente (11) angeordnet sind, die derart ausgebildet sind, um das Anheben mittels eines Transportfahrzeugs zu ermöglichen, und wobei der Container (1) ferner eine Temperiereinheit (5) umfasst, die derart ausgebildet ist, den Innenraum (2) auf eine vorbestimmte Temperatur T zu bringen, wobei die Temperiereinheit (5) eine über eine Solarenergieeinrichtung (51, 52) betriebene Heiz-/Kühleinheit (6) oder eine über ein Stromnetz betriebene Heiz-/Kühleinheit (6) umfasst, und wobei im Innenraum (2) eine Aufnahmeeinrichtung (21) für Schmelzspeicherelemente (81) oder Probenkörper (82) angeordnet ist, welche Aufnahmeeinrichtung (21) derart ausgebildet ist, zumindest zwei Schmelzspeicherelemente (81) oder Probenkörper (82) in einem Abstand zueinander anzuordnen.

## Beschreibung

Die Erfindung betrifft einen temperierbaren Container mit Vakuumisolationselementen gemäß dem unabhängigen Anspruch.

Es ist bekannt, dass Vakuumisolationsbehälter aufgrund des Einsatzes von Vakuumisolationselementen (z. B. Vakuumisolationspaneele - VIP) eine, im Vergleich zum Einsatz von Isolierschäumen, vielfach bessere Dämmwirkung haben.

Derartige Vakuumisolationsbehälter sind aus der Praxis bereits bekannt, so zum Beispiel im Bereich von passiv temperaturgeführten Transporten von temperaturempfindlichen Gütern, wie Lebensmitteln, Getränken, Pharmazieprodukten oder Medizinprodukten. Beim temperaturgeführten Transport wird ein vorbestimmter Temperaturbereich während der Transportdauer eingehalten. Passiv temperaturgeführt bedeutet hier, die Verwendung von zusätzlichen Kühlelementen, wie PCM (phase changing material), Schmelzspeicherelementen oder Trockeneis, die nicht an eine Energiequelle angeschlossen sind.

Aus dem Stand der Technik ist mit dem Grundlagenpatent EP 2 876 389 B1 ein Vakuumisolationsbehälter in der Art eines Transportcontainers zum passiv temperaturgeführten Transport geschützt. Dieser Transportcontainer hat drei Seitenwandelemente, ein Deckenelement, ein Bodenelement und mindestens ein Türelement. Das Türelement ist um eine Vertikalachse schwenkbar gelagert. Im Innenraum sind an den Seitenwänden schienenartige Aufnahmen befestigt, in die die Schmelzspeicherelemente für den Transport eingeschoben werden.

Der Nachteil bei der passiven Kühlung dieser Transportcontainer ist, dass die jeweiligen Schmelzspeicherelemente gewechselt werden müssen, was zum Beispiel den Einsatz zur Lagerung hinsichtlich der Lagerungsdauer beschränkt. Außerdem begrenzt die Verwendung der Schmelzspeicherelemente die bei der Kühlung realisierbaren Temperaturen und damit den Verwendungszweck, zum Beispiel zum Kühlen von Versuchs-Probekörpern.

Es ist die Aufgabe der Erfindung einen temperierbaren Container bereitzustellen, der die Nachteile im Stand der Technik bekannter Container überwindet und insbesondere eine ständig aktive Heizung oder Kühlung ermöglicht.

Diese Aufgabe wird durch einen temperierbaren Container gemäß Anspruch 1 gelöst. Vorteilhafte Aspekte der Erfindung bilden den Gegenstand der jeweiligen Unteransprüche.

Die Erfindung umfasst einen temperierbaren Container mit Vakuumisolationselementen und mit einem Innenraum, welcher Container eine Wandung, mit einer Öffnung für in den Innenraum einzulegende Gegenstände und ein, die Öffnung verschließendes, Türelement umfasst. An einer Außenseite des Containers sind Transportelemente angeordnet, die derart ausgebildet sind, um das Anheben mittels (der Hebezinken) eines Transportfahrzeugs zu ermöglichen. Der Container umfasst ferner eine (z. B. mit elektrischer Energie oder Wärmeenergie) angetriebene Temperiereinheit, die derart ausgebildet ist, den Innenraum auf eine vorbestimmte Temperatur T zu bringen. Aufgrund der Temperiereinheit wird ein Container zum Transport und zur Lagerung bereitgestellt, dessen Innenraumtemperatur über eine Heiz- oder Kühleinheit temperierbar ist. So lassen sich im Innenraum über lange Zeiträume kontinuierlich tiefe oder hohe Temperaturen realisieren, was den Einsatz zur Lagerung von Gegenständen oder Probenkörpern über lange Zeiträume ermöglicht. Die Vakuumisolationselemente in der Wandung sind derart ausgebildet, dass der Container einen thermischen Leitwert kleiner 6 W/K hat (bei Außendimensionen von 1432 mm x 1490 mm x 1580 mm (h) inkl. Transportelementen). Dies entspricht einem Wärmedurchgangskoeffizienten (basierend auf o. g. Beispieldaten inkl. aller Wärmebrücken) von kleiner 0,45 W/m²/K. Vorteilhafterweise ist im Innenraum eine Aufnahmeeinrichtung für Schmelzspeicherelemente oder Probenkörper angeordnet, wobei die Aufnahmeeinrichtung derart ausgebildet ist, zumindest zwei Schmelzspeicherelemente oder Probenkörper in einem Abstand zueinander anzuordnen.

Gemäß einem bevorzugten Aspekt der Erfindung umfasst die angetriebene Temperiereinheit eine über eine Solarenergieeinrichtung angetriebene elektrische Heiz-/Kühleinheit. Zum Beispiel kann die Solarenergieeinrichtung auf dem Container befestigt sein, so dass ein autarkes System zur Verfügung gestellt wird, das zum Einsatz in abgelegenen Gegenden, wie bei Entwicklungshilfeeinsätzen, geeignet ist.

Bevorzugt umfasst die Solarenergieeinrichtung ein Solarmodul (Photovoltaikmodul zur Umwandlung von (Sonnen-) Licht in elektrische Energie) und eine Steuereinheit. Das Solarmodul hat bevorzugt eine Größe und Form, um vollständig die Oberseite des Container zu bedecken. Die Steuereinheit ist derart ausgelegt, die vom Solarenergiemodul erzeugte elektrische Energie zu speichern oder zum Betrieb der Temperiereinheit zur Verfügung zu stellen. Das Solarmodul kann mit einer lösbaren Befestigung am Container werkzeuglos von Hand abnehmbar angeordnet werden.

Vorteilhafterweise umfasst die Steuereinheit eine Prozessoreinheit und einen Elektro-Akkumulator. Die Prozessoreinheit ist derart ausgelegt, um den Elektro-Akkumulator zu laden, wenn das Solarmodul elektrische Energie zur Verfügung stellt, die zu diesem Zeitpunkt nicht zum Betrieb der Heiz-/Kühleinheit verwendet wird. Die Prozessoreinheit wirkt mit Sensoren derart zusammen, dass der vom Solarmodul zur Verfügung gestellte Strom sowie der Ladezustand des Elektro-Akkumulators ermittelt wird, um den Ladevorgang zu steuern.

Es ist ferner bevorzugt, wenn die elektrische Heiz-/Kühleinheit einen Kühlkompressor umfasst, der derart ausgelegt ist, um mit unterschiedlicher (elektrischer) Energieaufnahme betrieben zu werden. Zum Beispiel kann ein VSC (variable speed compressor) eingesetzt werden, bei dem die Betriebsgeschwindigkeit und damit die Energieaufnahme entsprechend der gerade zur Verfügung stehenden Energie angepasst wird.

Bevorzugt umfasst die elektrische Heiz-/Kühleinheit einen Evaporator zum Verdampfen eines Kühlmittels.

Gemäß einem bevorzugten alternativen oder additiven Aspekt umfasst die elektrische Temperiereinheit eine über das Stromnetz betriebene Heiz-/Kühleinheit. Die über das Stromnetz betriebene Heiz-/Kühleinheit ermöglicht die Erzeugung besonders tiefer Temperaturen. Ferner kann die von der Solarenergieeinrichtung bereitgestellte elektrische Energie ergänzt werden. Das Stromnetz kann über konventionelle Energie und zusätzlich über eine Solaranlage versorgt werden. In einem Beispiel umfasst die Heiz-/Kühleinheit mehrere Kompressoren mit einem Netzanschluss zur Energieversorgung über das Stromnetz.

Vorteilhafterweise ist im Innenraum eine Aufnahmeeinrichtung für Schmelzspeicherelemente oder Probenkörper angeordnet. Dabei kann es sich um eine einzelne Palette zur Ablage handeln oder um eine Regalvorrichtung mit mehreren Einschubfächern. Die Aufnahmeeinrichtung für Schmelzspeicherelemente oder Probenkörper kann Rollen umfassen.

Die Aufnahmeeinrichtung für Schmelzspeicherelemente oder Probenkörper umfasst Transportelemente, die derart ausgebildet sind, um das Anheben mittels eines Transportfahrzeugs zu ermöglichen.

Bevorzugt umfasst die Aufnahmeeinrichtung Abstandhalter, in die jeweils eine Ecke einer Vielzahl von Schmelzspeicherelementen oder Probenkörpern einschiebbar ist oder die jeweils zwischen zwei Schmelzspeicherelementen oder Probenkörpern einlegbar sind. Der Abstandhalter kann einen Abstand D im Bereich von 10 mm bis 20 mm, insbesondere 15 mm, haben. Derartige Abstandhalter können an Schmelzspeicherelementen oder Probenkörpern unmittelbar oder mittelbar angeordnet sein.

Ein bevorzugter Aspekt sieht vor, dass die Aufnahmeeinrichtung für Schmelzspeicherelemente oder Probenkörper eine Größe und Form hat, um den Innenraum vollständig auszufüllen. In Abgrenzung zu Aufnahmen von PCM-Akkus für den Transport, wie in der EP 2 876 389 B1 beschrieben, sieht die Aufnahmevorrichtung eine maximale Auflagefläche zum Einlegen von PCM-Akkus zum Beispiel zum Einkühlen für den Transport vor.

Bevorzugt hat die Aufnahmeeinrichtung für Schmelzspeicherelemente oder Probenkörper eine Größe und Form, um den Innenraum teilweise auszufüllen.

Bevorzugt hat die Aufnahmeeinrichtung für Schmelzspeicherelemente oder Probenkörper eine Größe und Form, um den Innenraum mit einem Volumen im Bereich von 50 % bis 90 %, insbesondere 70 % bis 80 %, auszufüllen.

Das Verfahren zum Kühlen oder Heizen eines temperierbaren Containers umfasst die Schritte:
a) Bereitstellen eines temperierbaren Containers (1);
b) Befüllen des temperierbaren Containers (1);
c) Kühlen oder Heizen des temperierbaren Containers (1), wobei die Temperatur in einem Bereich von +/- 0,5 °C gehalten wird.

Bevorzugt umfasst der Schritt a) das Bereitstellten eines temperierbaren Containers wie oben beschrieben, und wobei der Schritt b) das Befüllen mit Schmelzspeicherelementen oder Probenkörpern umfasst

Im Folgenden wird die Erfindung anhand der in den beigefügten Zeichnungen dargestellten Beispiele näher erläutert.

Es zeigen:
- Fig. 1: eine perspektivische Seitenansicht auf einen temperierbaren Container gemäß einem ersten Ausführungsbeispiel der Erfindung mit einer Solarenergieeinrichtung;
- Fig. 2: eine Detailansicht auf den temperierbaren Container aus Fig. 1 im geschlossenen Zustand ohne Solarmodul;
- Fig. 3: eine perspektivische Seitenansicht auf einen temperierbaren Container gemäß einem zweiten Ausführungsbeispiel der Erfindung mit einem Netzanschluss;
- Fig. 4: eine perspektivische Seitenansicht auf einen temperierbaren Container mit einer alternativen Aufnahmeeinrichtung im ausgeschobenen Zustand;
- Fig. 5: eine perspektivische Seitenansicht auf einen temperierbaren Container mit einer alternativen Aufnahmeeinrichtung im eingeschobenen Zustand; und
- Fig.6: eine Aufnahmeeinrichtung in der Form eines Abstandhalters.

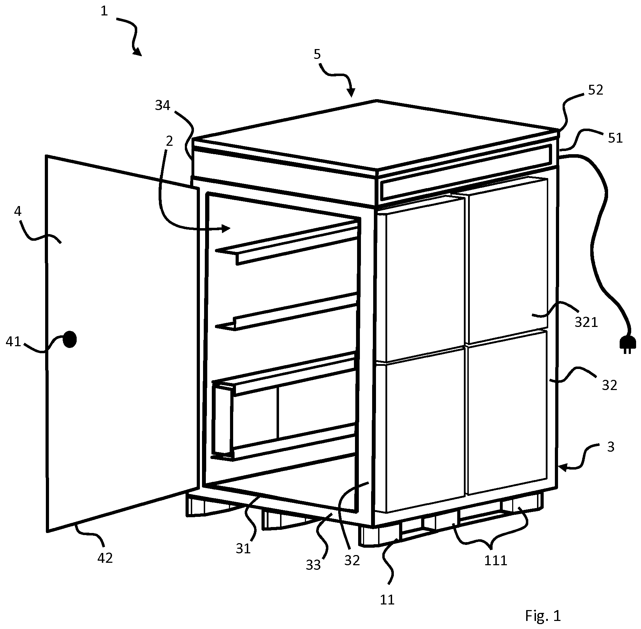

In **Fig. 1** ist eine perspektivische Seitenansicht auf einen temperierbaren Container 1 gemäß einer ersten Variante der Erfindung gezeigt. Bei diesem umfasst die Temperiereinheit eine Solarenergieeinrichtung 5. Der von der Solarenergieeinrichtung 5 erzeugte elektrische Strom wird zum Betrieb einer Heiz-/Kühleinheit (nicht dargestellt) eingesetzt.

Der gezeigte Container 1 umfasst eine Wandung 3 aus vier vertikal angeordneten Seitenteilen 32 sowie ein, einen Innenraum (Aufnahmeraum) nach unten abschließendes, Bodenelement 33 und ein, die Solarenergieeinrichtung 5 sowie die elektrisch angetriebene Heiz-/Kühleinheit (nicht dargestellt) tragendes, Deckenteil 34. Das rechte Seitenteil 32 ist offen dargestellt, so dass vier darin angeordnete Vakuumisolationspaneelen 321 zu sehen sind. Zwei Seitenteile 32 bilden zusammen mit dem Bodenelement 33 und dem Deckenteil 34 eine Öffnung 31 für in den Innenraum 2 einzulegende Gegenstände. Die Öffnung 31 ist durch ein an einem Seitenteil 32 schwenkbar angeordnetem Türelement 4, in der Art einer einflügeligen, um eine vertikale Achse schwenkbaren, Tür, verschließbar.

Bei geöffneter Tür 4 können durch die Öffnung 31 in den Innenraum 2 zum Beispiel Probenkörper oder Gegenstände bzw. Güter, wie Lebensmittel, Getränke, Pharmazieprodukte oder Medizinprodukte eingelegt werden.

Die Tür 4 schließt die Öffnung 31 mittels Dichtelement 42 luftdicht und thermisch isolierend ab, so dass im Innenraum 2 eine vorbestimmte Temperatur über lange Zeiträume gehalten werden kann. Die Tür 4 kann über eine Verriegelungseinheit 41 verschlossen werden, um den Zugang zum Innenraum 2 zum Beispiel nur mittels Schlüssel zu ermöglichen.

Zum Transport sowie zur Lagerung sind an der Unterseite des Bodenelements 33 des Containers 1 Transportelemente 11 in der Form von neun im Quadrat angeordneten Abstellblöcken 111 vorgesehen, die in der Art einer Palette miteinander verbunden sind. Diese Anordnung ermöglicht den Eingriff von Zinken eines Transportfahrzeugs (Gabelstabler) aus zwei Richtungen.

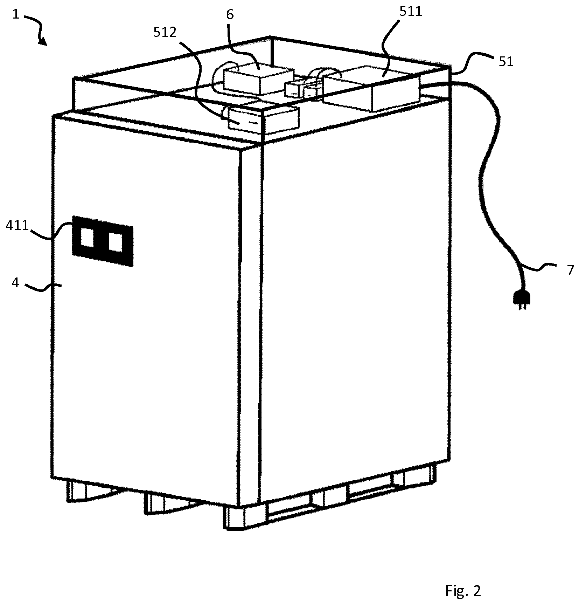

An der Oberseite verfügt der Container 1 ferner über eine elektrische Temperiereinheit 5 in der Art einer elektrisch angetriebenen Heiz-/Kühleinheit. Die elektrisch angetriebene Heiz-/Kühleinheit 5 ist gemäß der Funktionsweise einer Kompressionskältemaschine ausgebildet, um den Innenraum 2 auf eine vorbestimmte Temperatur T abzukühlen. Die Heiz-/Kühleinheit 5 ist über eine Solarenergieeinrichtung angetrieben. Die Solarenergieeinrichtung umfasst ein Solarmodul 52 in der Form einer die obere Fläche des Containers 1 vollständig bedeckenden Einheit zur Erzeugung von Solarstrom und eine unterhalb des Solarmoduls 52 angeordnete Steuereinheit 51. Die Steuereinheit 51 hat im Gehäuse (siehe Fig. 2) sämtliche Bestandteile angeordnet und verfügt über Lüftungsschlitze zur Versorgung mit Luft zum Kühlen der elektrischen Einheiten.

In **Fig. 2** ist der Container 1 aus Fig. 1 gezeigt, wobei das Solarmodul abgenommen wurde, so dass die Steuereinheit 51 der Solarenergieeinrichtung im Teilschnitt zu sehen ist. Die Steuereinheit 51 besteht aus einer Prozessoreinheit 511 und einem Elektro-Akkumulator 512. An die Prozessoreinheit 511 sind verschiedenen Sensoren zur Ermittlung der, im Elektro-Akkumulator 512 und aufgrund des Solarmoduls, zur Verfügung stehenden elektrischen Energie angeschlossen. Die Prozessoreinheit 511 ist derart ausgelegt, um den Elektro-Akkumulator 512 zu laden, wenn das Solarmodul elektrische Energie zur Verfügung stellt und diese zum momentanen Zeitpunkt nicht zum Betrieb der Heiz-/Kühleinheit 6 verwendet wird.

Die Heiz-/Kühleinheit 6 ist in der Art einer Kompressionskältemaschine ausgebildet und hat einen Kühlkompressor, der derart ausgelegt ist, um mit unterschiedlicher Energieaufnahme betrieben zu werden.

In der gezeigten Darstellung ist die Tür 4 verschossen und verfügt über einen Handgriff 411 zum Öffnen der Tür.

Bei der gezeigten Variante ist die über die Solarenergieeinrichtung angetriebene Heiz-/Kühleinheit 6 zusätzlich über das Stromnetz betreibbar und weist dazu einen Netzstecker 7 auf.

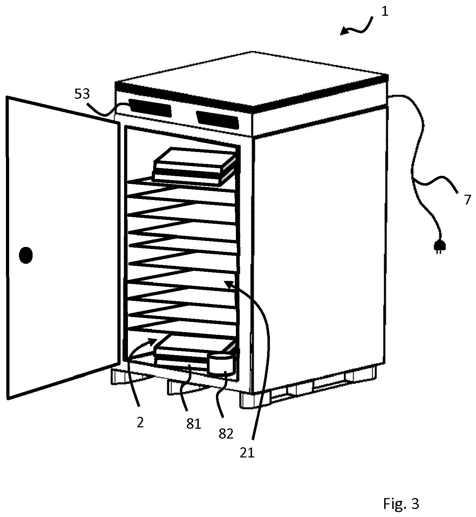

Eine dazu alternative Variante ist in **Fig. 3** gezeigt, wobei der temperierbare Container 1 einen Netzanschluss 7 zur Versorgung über ein Stromnetz umfasst.

Die ausschließlich über das Stromnetz betriebene elektrische Heiz-/Kühleinheit (siehe Fig. 2) umfasst in diesem Beispiel mehrere Kompressoren mit einem Netzanschluss 7 zur Energieversorgung über das Stromnetz. Im oberen Bereich sind Lüftungsschlitze 53 angeordnet.

Vorteilhafterweise ist im Innenraum 2 eine Aufnahmeeinrichtung 21 für Schmelzspeicherelemente 81 oder Probenkörper 82 angeordnet. Die Schmelzspeicherelemente 81 können zum passiv gekühlten Transport vorbereitet werden. Die Probenkörper 82 können für die Durchführung von Versuchen gekühlt aufbewahrt werden.

Die Aufnahmeeinrichtung 21 für Schmelzspeicherelemente 81 oder Probenkörper 82 hat eine Größe und Form, um den Innenraum 2 vollständig auszufüllen. Im gezeigten Beispiel handelt es sich um Regalfächer, die sich über die gesamte Höhe des Innenraums 2 erstrecken.

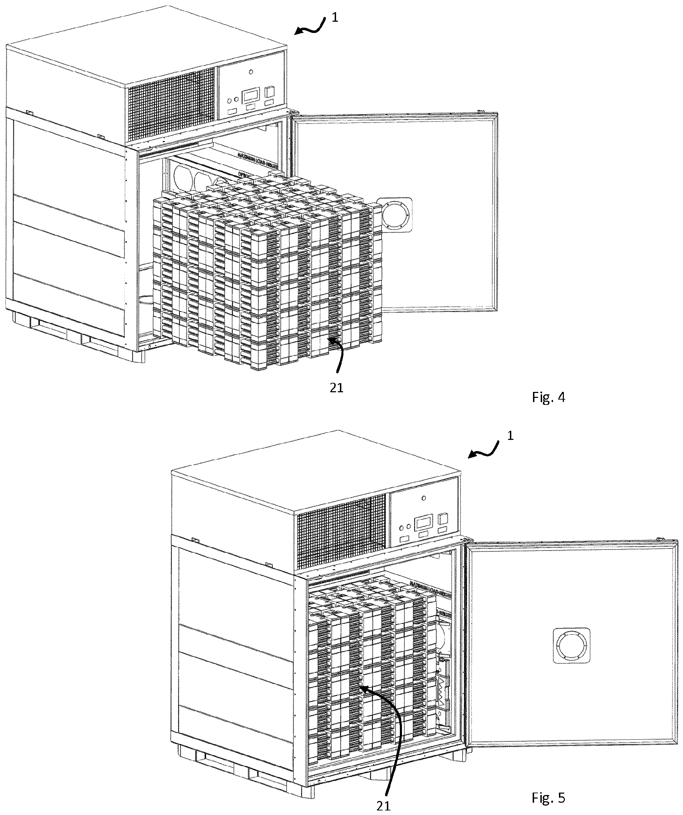

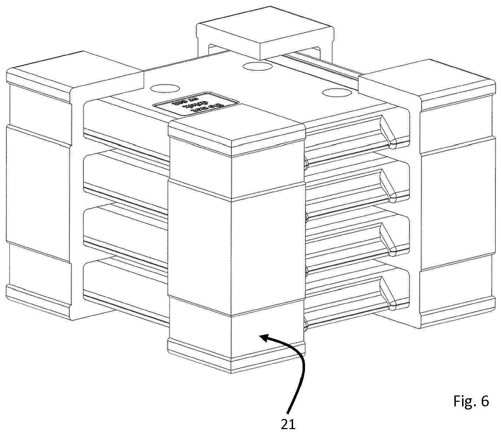

In Fig. 4 bis Fig. 6 ist eine perspektivische Seitenansicht auf einen temperierbaren Container mit einer alternativen Aufnahmeeinrichtung 21 im ausgeschobenen bzw. eingeschobenen Zustand gezeigt. Darin ist eine Aufnahmeeinrichtung 21 in der Form eines mehrteiligen Abstandhalters ausgebildet, wobei in jeweils eine Ecke einer Vielzahl von Schmelzspeicherelementen 81 oder Probenkörpern 82 einschiebbar ist oder die jeweils zwischen zwei Schmelzspeicherelementen 81 oder Probenkörpern 82 einlegbar sind. Dazu kann die Aufnahmeeinrichtung auf zwischen die Schmelzspeicherelementen 81 oder Probenkörpern 82 einschiebbar sein; zum Beispiel als profilierte Zwischenlage.

## Patentansprüche

1. Temperierbarer Container (1) mit Vakuumisolationselementen mit einem Innenraum (2), welcher Container (1) eine Wandung (3), mit einer Öffnung (31) für in den Innenraum (2) einzulegende Gegenstände, und ein die Öffnung (31) verschließendes Türelement (4) umfasst, wobei an einer Außenseite des Containers (1) Transportelemente (11) angeordnet sind, die derart ausgebildet sind, um das Anheben mittels eines Transportfahrzeugs zu ermöglichen, und wobei der Container (1) ferner eine Temperiereinheit (5) umfasst, die derart ausgebildet ist, den Innenraum (2) auf eine vorbestimmte Temperatur T zu bringen, wobei die Temperiereinheit (5) eine über eine Solarenergieeinrichtung (51, 52) betriebene Heiz-/Kühleinheit (6) oder eine über ein Stromnetz betriebene Heiz-/Kühleinheit (6) umfasst, und wobei im Innenraum (2) eine Aufnahmeeinrichtung (21) für Schmelzspeicherelemente (81) oder Probenkörper (82) angeordnet ist, welche Aufnahmeeinrichtung (21) derart ausgebildet ist, zumindest zwei Schmelzspeicherelemente (81) oder Probenkörper (82) in einem Abstand zueinander anzuordnen.

2. Temperierbarer Container (1) gemäß Anspruch 1, wobei die Solarenergieeinrichtung (51, 52) ein Solarmodul (52) und eine Steuereinheit (51) umfasst.

3. Temperierbarer Container (1) gemäß Anspruch 2, wobei die Steuereinheit (51) eine Prozessoreinheit (511) und einen Elektro-Akkumulator (512) umfasst, und wobei die Prozessoreinheit (511) derart ausgelegt ist, um den Elektro-Akkumulator (512) zu laden, wenn das Solarmodul (52) elektrische Energie zur Verfügung stellt, die zu diesem Zeitpunkt nicht zum Betrieb der Heiz-/Kühleinheit (6) verwendet wird.

4. Temperierbarer Container (1) gemäß Anspruch 2 oder 3, wobei die elektrische Heiz-/Kühleinheit (6) einen Kühlkompressor umfasst, der derart ausgelegt ist, um mit unterschiedlicher Energieaufnahme betrieben zu werden.

5. Temperierbarer Container (1) gemäß einem der Ansprüche 2 bis 4, wobei die elektrische Heiz-/Kühleinheit (6) einen Evaporator zum Verdampfen eines Kühlmittels umfasst.

6. Temperierbarer Container (1) gemäß Anspruch 1, wobei die Heiz-/Kühleinheit (6) mehrere Kompressoren mit einem Netzanschluss (7) zur Energieversorgung über das Stromnetz umfasst.

7. Temperierbarer Container (1) gemäß einem der vorangehenden Ansprüche, wobei die Aufnahmeeinrichtung (21) für Schmelzspeicherelemente (81) oder Probenkörper (82) Rollen umfasst.

8. Temperierbarer Container (1) gemäß einem der vorangehenden Ansprüche, wobei die Aufnahmeeinrichtung (21) für Schmelzspeicherelemente (81) oder Probenkörper (82) Transportelemente umfasst, die derart ausgebildet sind, um das Anheben mittels eines Transportfahrzeugs zu ermöglichen.

9. Temperierbarer Container (1) gemäß einem der vorangehenden Ansprüche, wobei die Aufnahmeeinrichtung (21) Abstandhalter umfasst, in die jeweils eine Ecke einer Vielzahl von Schmelzspeicherelementen (81) oder Probenkörpern (82) einschiebbar ist oder die jeweils zwischen zwei Schmelzspeicherelementen (81) oder Probenkörpern (82) einlegbar sind.

10. Temperierbarer Container (1) gemäß einem der vorangehenden Ansprüche, wobei die Aufnahmeeinrichtung (21) für Schmelzspeicherelemente (81) oder Probenkörper (82) eine Größe und Form hat, um den Innenraum (2) vollständig auszufüllen.

11. Temperierbarer Container (1) gemäß einem der vorangehenden Ansprüche, wobei die Aufnahmeeinrichtung (21) für Schmelzspeicherelemente (81) oder Probenkörper (82) eine Größe und Form hat, um den Innenraum (2) teilweise auszufüllen.

12. Temperierbarer Container (1) gemäß einem der vorangehenden Ansprüche, wobei die Aufnahmeeinrichtung (21) für Schmelzspeicherelemente (81) oder Probenkörper (82) eine Größe und Form hat, um den Innenraum (2) mit einem Volumen im Bereich von 50 % bis 90 %, insbesondere 70 % bis 80 %, auszufüllen.

13. Temperierbarer Container (1) gemäß einem der vorangehenden Ansprüche, wobei die Wandung (3) ein oder mehrere Vakuumisolationselemente enthält.

14. Temperierbarer Container (1) gemäß Anspruch 14, wobei die Vakuumisolationselemente aus pyrogener Kieselsäure sind.

15. Verfahren zum Kühlen oder Heizen eines temperierbaren Containers umfassend die Schritte:
a) Bereitstellen eines temperierbaren Containers (1);
b) Befüllen des temperierbaren Containers (1);
c) Kühlen oder Heizen des temperierbaren Containers (1), **dadurch gekennzeichnet, dass** die Temperatur in einem Bereich von +/- 0,5 °C gehalten wird.

16. Verfahren nach Anspruch 14, wobei der Schritt a) das Bereitstellten eines temperierbaren Containers nach einem der Ansprüche 1 bis 14 umfasst, und wobei der Schritt b) das Befüllen mit Schmelzspeicherelementen (81) oder Probenkörpern (82) umfasst
